# EUROPEAN PATENT APPLICATION

(11) **EP 4 814 735 A1**
(43) Date of publication of application: **30.09.2026**
(21) Application number: 24906546.7
(22) Date of filing: 20.12.2024
(51) Int. Cl.: G06F 15/80

(54) **CHIPLET-BASED MICROPROCESSOR SYSTEM, ARCHITECTURE METHOD, CHIP, AND ELECTRONIC DEVICE**

(30) Priority: 22.12.2023 CN 202311795291
(71) Applicant: Theo End Computing (Nanjing) Technology Co., Ltd., Nanjing, Jiangsu 210031 (CN)
(72) Inventor: ZHENG, Shengwei, Shenzhen, Guangdong 518129 (CN); JIN, Liang, Shenzhen, Guangdong 518129 (CN)
(74) Representative: Ran, Handong
(86) International application number: PCT/CN2024/141033
(87) International publication number: WO 2025/131073

(57) **Abstract**

The present application discloses a chiplet-based microprocessor system, an architecture method, a chip, and an electronic device. The microprocessor system is based on a chiplet architecture, and comprises: a plurality of computing dies having a computing function; a data die coupled to the plurality of computing dies, wherein the data die is provided with an external interface unit, a memory read-write unit, and a plurality of co-processing units for data acceleration processing; and a plurality of memory units arranged close to the data die. According to the microprocessor system provided by the present application, the co-processing units are arranged on the data die, thereby effectively utilizing the space on the data die, achieving computation offloading, and achieving high performance of the microprocessor system.

## Description

### CROSS-REFERENCE TO RELATED APPLICATIONS

This application claims priority to Chinese Patent Application No. 202311795291.3, entitled "Chiplet-Based Microprocessor System, Architectural Method, Chip, and Electronic Device", filed with the China National Intellectual Property Administration on December 22, 2023, which is incorporated herein by reference in its entirety.

### TECHNICAL FIELD

The present invention relates to the field of chip design, and specifically relates to a chiplet-based microprocessor (CPU) system, an architectural method, a chip, and an electronic device.

### BACKGROUND

As the semiconductor industry faces increasing difficulty in process advancement and Moore's Law gradually loses effectiveness, achieving chips with better performance and higher integration requires the adoption of more advanced packaging processes, with chiplet technology becoming a major technical direction. The adoption of chiplet technology by manufacturers in the industry enables corresponding chip solutions to have the following characteristics.
1. Implementation costs are reduced. During chip manufacturing, the larger the area of a single die is, the greater the manufacturing difficulty. Furthermore, manufacturing defects are randomly distributed and are always present, and the larger the area of a single die is, the higher the probability of a defect on the die. This inevitably results in a sharp decrease in yield. The adoption of chiplet technology can achieve an appropriate die size, thereby enabling optimal cost control.
2. A well-designed chiplet solution enables analog IP and digital IP to be implemented on different wafers using different processes. For example, various high-speed IO PHY/Serdes modules may be placed on an IO die and high-frequency digital logic may be integrated on a compute die. This can effectively reduce the complexity of back-end implementation that would otherwise arise from integrating such components on a single die.
3. In addition to the above, the adoption of chiplet technology can also shorten the time-to-market of chip products. Generally, analog IP is slow to mature and is insensitive to process. When properly designed on a relatively less advanced process, it can achieve performance comparable to that achieved on a latest process. Digital logic, in contrast, benefits significantly from advanced processes in terms of operating frequency, power consumption, and area. Chiplet technology allows the analog part of a system-on-chip (SoC) to be implemented on a relatively mature process and the digital logic part on the latest process, thereby avoiding the long waiting time for analog IP to mature that would be necessary if both parts were implemented on a single latest process.
4. Chiplet technology can also help achieve better performance. As mentioned above, implementing the main computational logic on the most advanced process allows the compute part to achieve maximum energy efficiency without any significant loss of performance in high-speed IO or analog IP. Such a system offers optimal overall performance.

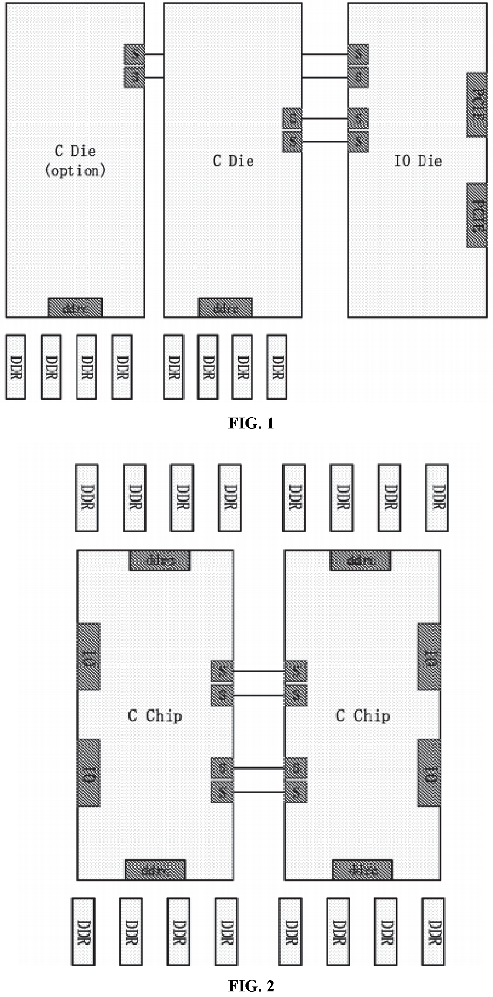

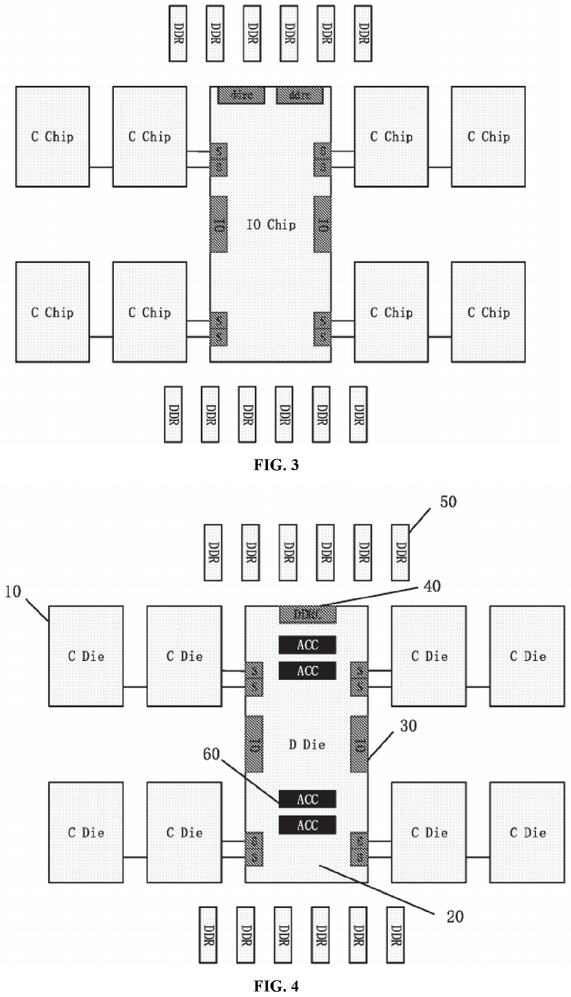

Currently available chiplet-based CPU solutions are as follows.
1) As shown in FIG. 1, Solution 1 adopts a scheme of a combination of a compute die and a compute IO. This solution employs chiplet technology and overcomes the yield issue. However, a DDRC in FIG. 1 is still configured on the compute die, thus failing to achieve complete digital-analog functional separation.
2) As shown in FIG. 2, Solution 2 adopts a chiplet-based extension scheme. This solution reduces the area of a single die. However, complete digital-analog functional separation is still not achieved in this solution, making it impossible to use different processes for analog and digital functions, and failing to achieve optimal performance and cost.
3) As shown in FIG. 3, Solution 3 uses an IO die and multiple compute dies, and overcomes the issue of incomplete digital-analog functional separation present in Solutions 1 and 2. However, the area of the IO die in this solution is mainly determined by the size of individual IOs, and the IOs are arranged around the periphery of the die, inevitably resulting in a large amount of unused space on the IO die and thus a waste of space. In addition, currently, high-performance computing chips in data centers have many processing tasks that reside on the host and need to be offloaded to reduce CPU load. However, in Solution 3, task offloading is actually implemented through another C die (e.g., a DPU), which incurs higher cost. The IO die in Solution 3 does not incorporate a coprocessor for compute offloading.

### SUMMARY OF THE INVENTION

An objective of the present invention is to address, at least to some extent, one of the technical problems described above.

To achieve the above objective, the present invention proposes a microprocessor system. The microprocessor system is based on a chiplet architecture and includes: a plurality of compute dies with computing functions; a data die coupled to the plurality of compute dies and provided with an external interface unit, a memory read/write unit, and a plurality of coprocessing units for accelerated data processing; and a plurality of memory units arranged close to the data die.

The coprocessing units are located in close proximity to the memory read/write unit.

The data die is partitioned into a plurality of data dies, and the plurality of data dies are interconnected.

The plurality of data dies are configured to be interconnected in a mesh or ring pattern.

The plurality of compute dies are configured to be stacked on the data die.

The plurality of data dies are configured to be stacked one on top of another.

To achieve the above objective, an architectural method is proposed in another aspect of the present invention. The architectural method is used for a microprocessor system, which is based on a chiplet architecture, and the method includes: arranging a plurality of compute dies with computing functions; arranging a data die coupled to the plurality of compute dies, and arranging, on the data die, an external interface unit, a memory read/write unit, and a plurality of coprocessing units for accelerated data processing; and arranging a plurality of memory units close to the data die.

The architectural method further includes: arranging the coprocessing units in close proximity to the memory read/write unit.

The architectural method further includes: partitioning the data die into a plurality of data dies, and interconnecting the plurality of data dies.

The plurality of data dies are interconnected in a mesh or ring pattern.

The architectural method further includes: arranging the plurality of compute dies stacked on the data die.

The plurality of data dies are arranged stacked one on top of another.

To achieve the above objective, a processor chip is provided in yet another aspect of the present invention. The processor chip includes the aforementioned microprocessor system.

To achieve the above objective, an electronic device is provided in a further aspect of the embodiments of the present invention. The electronic device is configured with the aforementioned processor chip.

Additional aspects and advantages of the present invention will be partly set forth in the following description, and partly become apparent from the following description, or may be understood through practice of the present invention.

### BRIEF DESCRIPTION OF THE DRAWINGS

The above-described and/or additional aspects and advantages of the present invention will become apparent and easy to understand from the following description of the embodiments in conjunction with the accompanying drawings, in which:
FIG. 1 is a schematic block diagram of an existing chiplet-based CPU system;
FIG. 2 is a schematic block diagram of another existing chiplet-based CPU system;
FIG. 3 is a schematic block diagram of yet another existing chiplet-based CPU system;
FIG. 4 is a schematic block diagram of a chiplet-based microprocessor system;
FIG. 5 is a schematic block diagram of another chiplet-based microprocessor system;
FIG. 6 is a schematic block diagram of yet another chiplet-based microprocessor system;
FIG. 7 is a schematic block diagram of still another chiplet-based microprocessor system;
FIG. 8 is a schematic flow diagram of an architectural method for a microprocessor; and
FIG. 9 is a schematic diagram of an electronic device.

### DETAILED DESCRIPTION

Embodiments of the present invention are described in detail below, with examples of the embodiments shown in the drawings, in which the same or similar reference numerals throughout represent the same or similar elements or elements having the same or similar functions. The embodiments described below with reference to the drawings are exemplary, and are intended to explain the present invention and should not be construed as limiting the present invention.

A chiplet, also known as a small chip, is a packaging technology in which a complex chip is partitioned into a set of dies each having an individual function, and these dies are then interconnected and packaged together with a base die.

As described above, although systems based on chiplet packaging have been proposed in existing technologies, the existing system architectures suffer from issues such as inability to effectively separate analog functions from digital functions and to fully offload computational workload from CPU.

In view of this, the present invention proposes a chiplet-based microprocessor system, an architectural method, a chip, and an electronic device to overcome the aforementioned technical problems in the existing technologies.

FIG. 4 is a schematic block diagram of a microprocessor system. As shown in FIG. 4, the microprocessor system is based on a chiplet architecture, and the microprocessor system includes: a plurality of compute dies (C dies) 10 with computing functions; a data die (D die) 20 coupled to the plurality of compute dies 10, the data die 20 being provided with an external interface unit 30, a memory read/write unit 40, and a plurality of coprocessing units 60 for accelerated data processing; and a plurality of memory units 50 arranged close to the data die 20.

For example, as shown in FIG. 4, the CPU system in FIG. 4 includes one data die 20. The data die 20 may be regarded as a management and data center for the plurality of compute dies 10. The data die may be coupled to the plurality of compute dies 10 via the external interface unit 30. The various units on the data die may be connected via a bus to enable transmission of signal data. In the embodiments of the present invention, the data die 20 is provided with the coprocessing units 60. The coprocessing units 60 are programmable and may be used to support accelerated data processing for various applications, for example, network acceleration, storage acceleration, and data encryption operations. Since the data die 20 is provided with the coprocessing units 60, the coprocessing units 60 can assist in processing various computational requests, offloading computational load, and shortening data access paths.

In the case of data encryption operations, the existing technologies do not provide a coprocessing unit dedicated to accelerated data processing on a D die and therefore need to rely on C-cores of a C chip for accelerated data processing. The specific process is as follows: data to be processed is read from a memory (DDR) via a bus and processed by a C-core, and then the processed data is written back to the DDR via the bus. The specific workflow is as follows:
ddr->ddrc->ddie-bus->sio->cdie-bus->c-core->cdie-bus->sio->ddie-bus->ddrc->ddr.

In the present invention, however, the D die is provided with the coprocessing units which can assist in data encryption processing. Taking as an example that the coprocessing units are accelerator processors (ACCs), the data access process in the present invention is as follows:
ddr->ddrc->ddie-bus->ACC ->ddie-bus->ddrc->ddr.

As can be seen from the above process, the ACCs read data from the DDRs through the DDRCs and a D-die bus, and after data processing is completed, the processed data is written back to the DDRs through the D-die bus and the DDRCs. Clearly, compared with the existing access process described above, the access path in the embodiments of the present invention is greatly shortened.

As shown in FIG. 4, the data die 20 in the present invention is provided with the memory read/write unit 40 capable of reading data from and writing data to the memory units 50. Compared with the existing technologies, arranging the memory read/write unit on the data die effectively achieves complete separation between analog IP and digital IP.

In a preferred implementation, the coprocessing units are located in close proximity to the memory read/write unit.

For example, as shown in FIG. 4, the memory read/write unit 40 is disposed on an upper side of the data die 20, and therefore, two coprocessing units 60 (ACCs) in FIG. 4 are disposed close to the memory read/write unit 40 on the upper side of the data die 20, such that the distance between the coprocessing units 60 and the memory read/write unit 40 is reduced. With the relatively shorter distance, the data access path is further shortened, enabling near-memory data processing.

In a preferred implementation, the data die is partitioned into a plurality of data dies, and the plurality of data dies obtained from the portioning are interconnected.

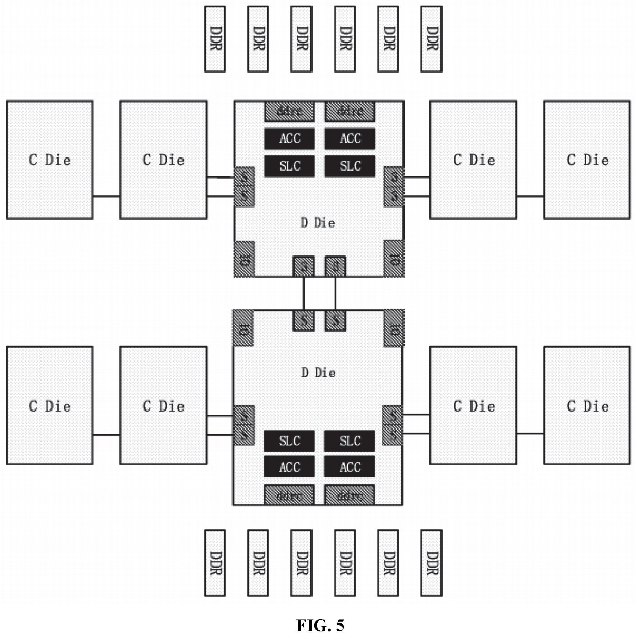

For example, as more functions are incorporated into the data die, the area of the data die inevitably increases. To improve product yield, in the present invention, the data die may be further partitioned into a plurality of data dies, with the external interface unit, the memory read/write unit, and the coprocessing units originally on the data die disposed on the resulting data dies. As shown in FIG. 5, the D die in FIG. 5 is segmented into two dies. Each of the two resulting D dies is provided with two ACCs, two SLCs, and one DDRC. Similarly, for the plurality of coupled C dies, after the D die is partitioned, the C dies are correspondingly coupled to the resulting D dies.

It should be noted that the number of dies into which the D die is partitioned is not limited to two as mentioned above. In the present invention, the D die may also be segmented into three or more dies. The specific number of dies resulted from the partitioning may be set based on actual requirements and will not be further described here.

In a preferred implementation, the plurality of data dies obtained from the partitioning are configured to be interconnected to one another in a mesh or ring pattern.

Ring interconnection involves connecting the plurality of D dies obtained from the partitioning end to end to form a ring structure. This interconnection scheme facilitates efficient communication among the D dies without the need for a central controller, reduces latency and supports scalability of D-die interconnection, and can thus improve the overall performance of the CPU system. Mesh interconnection involves arranging the plurality of D dies in a regular grid, in which each D die is connected to adjacent D dies in the same row and column. This interconnection scheme increases network dimension among the D dies, improves inter-die communication bandwidth, and reduces network latency. It also facilitates the addition of more D dies when further partitioning of the D die is required, thereby supporting more cores.

The two interconnection schemes described above are merely preferred ones, and the embodiments of the present invention are not limited thereto. Those skilled in the art may adopt an interconnection scheme suitable for scalability according to actual requirements, and the present invention is not restricted in this respect.

In a preferred implementation, the plurality of compute dies are configured to be stacked on the data die.

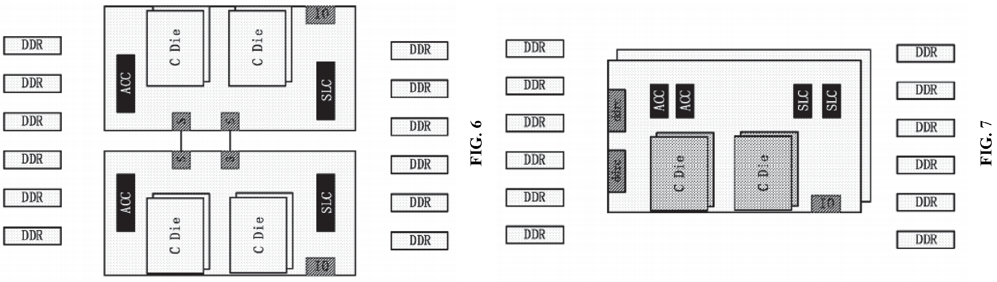

For example, as shown in FIG. 5, the plurality of C dies in FIG. 5 are in a planar distribution. However, as more functions are incorporated into the CPU system and more C dies are added, the area for this planar distribution of the C dies inevitably increases, leading to an excessively large overall package size of the CPU system. Therefore, as shown in FIG. 6, the present invention adopts a 3D packaging technology (also known as 3D stacking technology), with the plurality of C dies stacked on corresponding D dies to which they are coupled. It should be noted that the stacking of the plurality of C dies merely alters the arrangement between the C dies and the D dies, while the stacked C dies remain coupled with the corresponding D dies to enable data communication. This 3D stacking scheme effectively utilizes vertical space and reduces planar area expansion. Furthermore, it shortens communication paths between the C dies and the D dies, thereby providing greater communication bandwidth.

In a preferred implementation, the plurality of data dies are configured to be stacked one on top of another.

FIG. 7 is a schematic diagram showing further stacking on the basis of the stacking arrangement in FIG. 6. As shown in FIG. 7, to further reduce the overall area, the plurality of D dies may also be stacked in the present invention. In other words, on the basis of stacking the plurality of C dies, the plurality of D dies may similarly be further stacked one on top of another to further optimize the overall package size of the CPU system.

In addition, the present invention also takes into account heat dissipation issues arising from the use of the stacking schemes. Therefore, the CPU system in the present invention may also be configured with appropriate heat dissipation channels and structure based on actual requirements to ensure stable operation of the overall CPU system.

In summary, the chiplet-based microprocessor system according to the present invention offers the following advantages.
1) Separation between analog IP and digital IP can be achieved.
2) The arrangement of the coprocessing units on the D die enables effective computation offloading and improves performance of the CPU system.
3) Arranging the coprocessing units close to the memory optimizes the access path and process and accelerates the processing speed of the CPU system.
4) The stacking arrangement of the plurality of dies reduces the package size of the CPU system, resulting in a more compact, reasonable overall structure.
5) Optimal performance, power consumption, and area (PPA) can be achieved.

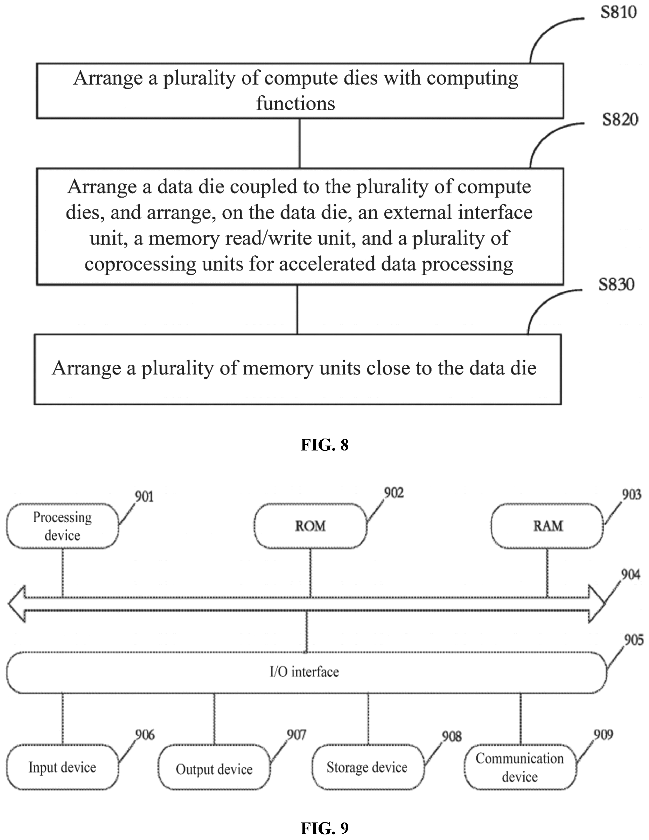

Based on the same technical concept, the present invention further provides an architectural method. The architectural method is applied to a CPU system based on a chiplet architecture. The architectural method, as shown in FIG. 8, includes the following steps.

In Step S810, a plurality of compute dies (C dies) with computing functions are arranged.

For example, in the present invention, different functions are configured on different dies based on chiplet packaging technology.

In Step S820, a data die (D die) is arranged coupled to the plurality of compute dies; and an external interface unit, a memory read/write unit, and a plurality of coprocessing units for accelerated data processing are arranged on the data die.

For example, to facilitate effective management and control of the individual C dies, a D die (D Chip) coupled to the plurality of C dies is provided in the present invention. The D die is provided with an external interface unit, such as IO, for interconnecting the D die with the plurality of C dies, and is provided with a memory read/write unit, such as DDR controller (DDRC), for controlling reading of data from the DDR memory or writing of data to the DDR memory. In the present invention, the plurality of coprocessing units are arranged in areas of the D die that are not occupied by the external interface unit and the memory read/write unit, allowing effective utilization of the area of the D die. Furthermore, the coprocessing units can assist in processing various computational requests, offload computational load, and shorten data access paths.

In Step S830, a plurality of memory units are arranged close to the data die.

For example, a plurality of memory units are arranged close to the data die, specifically, close to the memory read/write unit, to facilitate data reading and writing by the memory read/write unit from and to the memory units.

Therefore, the architectural method according to the present invention, by using chiplet packaging technology, endows a single die with both computing and data functions and provides coprocessing units on a data die. This, on one hand, efficiently utilizes the area of the data die, and on the other hand, realizes computational offloading and improves the performance of the architected CPU system. Furthermore, arranging the memory read/write unit on the data die enables effective and complete separation between analog IP and digital IP.

In a preferred implementation, the architectural method further includes arranging the coprocessing units in close proximity to the memory read/write unit.

In the present invention, arranging the coprocessing units in close proximity to the memory read/write unit further improves overall processing capacity and enables near-memory data processing, thereby further improving the performance of the CPU system.

In a preferred implementation, the architectural method further includes partitioning the data die into a plurality of data dies, and interconnecting the plurality of resulting data dies.

For example, as more complex functions are incorporated into the D die, the area of a single D die also increases. To effectively reduce the area of a single D die and achieve performance scalability of the CPU system, the D die in the present invention may be further partitioned based on its configuration, and the D dies resulted from the portioning may be interconnected. Each die obtained from the partitioning has an area smaller than that of the die before partitioning. This also avoids defects caused by an excessively large die area. For example, the original D die is provided with four ACCs and is interconnected with eight C dies. If the D die is partitioned into two dies, each resulting D die is provided with two ACCs and is connected to four C dies.

In the present invention, partitioning the D die effectively reduces the area of each resulting D die and allows more workload to be offloaded to the resulting D dies, thereby facilitating overall performance scalability of the CPU system.

In a preferred implementation, the plurality of data dies obtained from the partitioning are interconnected in a mesh or ring pattern.

In a preferred implementation, the plurality of compute dies are configured to be stacked on the data die.

For example, as mentioned above, the present invention involves a chiplet-based architecture. As more functions are incorporated, the number of C dies in the entire CPU system also increases. The addition of a plurality of C dies in the same plane will inevitably result in an excessively large overall package size of the CPU system. Therefore, the embodiments of the present invention adopt a 3D packaging scheme. Specifically, the plurality of C dies are stacked on corresponding D dies coupled thereto. For example, the plurality of C dies may be vertically coupled to the D die to form a compact 3D structure.

In a preferred implementation, the plurality of data dies obtained from the partitioning are arranged stacked one on top of another.

For example, the plurality of D dies may be vertically stacked one on top of another.

In the present invention, the stacked architecture of the plurality of dies can reduce the package footprint compared with conventional planar packaging, making the package structure more compact, and improving space utilization. Moreover, it can also shorten interconnection paths between dies, improve speed and reliability of signal transmission between dies, and reduce signal latency and power consumption, thereby enhancing the overall performance of the architected CPU system, and facilitating faster data transmission and processing.

For more details and advantages of the architectural method, reference may be made to the description of the chiplet-based microprocessor above, which will not be further described here.

Accordingly, the present invention further provides a processor chip, which comprises the above-described microprocessor system obtained based on a chiplet architecture.

Accordingly, the present invention further provides an electronic device configured with the aforementioned processor chip.

Fig. 9 is a schematic structural diagram of an electronic device 900 adapted to implement the embodiments of the present invention. The electronic device in embodiments of the present invention may include, but is not limited to, mobile terminals such as a mobile phone, a notebook computer, a digital broadcast receiver, a PDA (personal digital assistant), a PAD (tablet computer), a PMP (portable multimedia player), and a vehicle-mounted terminal (e.g., a vehicle navigation terminal), and fixed terminals such as a digital TV and a desktop computer. The electronic device shown in Fig. 9 is merely an example and should not bring about any limitation on the functions and scope of use of the embodiments of the present invention.

As shown in FIG. 9, the electronic device 900 may include a processing device (e.g., a central processing unit or a graphics processing unit) 901, which is configured to execute various appropriate actions and operations based on programs stored in a read-only memory (ROM) 902 or programs loaded from a storage device 908 into a random access memory (RAM) 903. Various programs and data required for operations of the electronic device 900 are also stored in the RAM 903. The processing device 901, the ROM 902, and the RAM 903 are connected to one another through a bus 904. An input/output (IO) interface 905 is also connected to the bus 904.

Typical examples of devices that may be connected to the IO interface 905 include: an input device 906, such as a touch screen, a touch pad, a keyboard, a mouse, a camera, a microphone, an accelerometer, and a gyroscope; an output device 907, such as a liquid crystal display (LCD), a speaker, and a vibrator; a storage device 908, such as a magnetic tape and a hard disk drive; and a communication device 909. The communication device 909 allows the electronic device 900 to communicate with other devices wirelessly or via wire to exchange data. Although FIG. 9 illustrates the electronic device 900 having various devices, it should be understood that not all of the illustrated devices are required to be implemented or provided. More or fewer devices may alternatively be implemented or provided.

The above description merely represents preferred embodiments of the present invention and illustrates technical principles applied therein. Those skilled in the art should understand that the scope of disclosure involved in the present invention is not limited to the technical solutions formed by specific combinations of the foregoing technical features, and shall also cover other technical solutions formed by any combination of the foregoing technical features or equivalent features thereof without departing from the foregoing concept, for example, a technical solution formed by replacement of the foregoing features with technical features with similar functions disclosed in the present invention (but not limited thereto).

In addition, although the various operations are described in a specific order, it should not be construed as requiring that these operations be performed in the specific illustrated order or in a sequential order. Under certain circumstances, multitasking and parallel processing may be advantageous. Similarly, although several specific implementation details are included in the foregoing discussions, these details should not be construed as limiting the scope of the present invention. Certain features described in the context of separate embodiments may also be implemented in combination in a single embodiment. Conversely, various features described in the context of a single embodiment may also be implemented individually or in any suitable subcombination across multiple embodiments.

It should be understood that although subject matters have been described in language specific to structural features and/or logical acts of methods, the subject matters defined in the appended claims are not necessarily limited to the specific features or acts described above. Conversely, the specific features and acts described above are merely exemplary forms for implementing the claims.

## Claims

1. A microprocessor system based on a chiplet architecture, comprising:
a plurality of compute dies with computing functions;
a data die coupled to the plurality of compute dies, wherein the data die is provided with an external interface unit, a memory read/write unit, and a plurality of coprocessing units for accelerated data processing; and
a plurality of memory units arranged close to the data die.

2. The microprocessor system according to claim 1, wherein the coprocessing units are located in close proximity to the memory read/write unit.

3. The microprocessor system according to claim 1, wherein the data die is partitioned into a plurality of data dies, and the plurality of data dies obtained from the partitioning are interconnected.

4. The microprocessor system according to claim 3, wherein the plurality of data dies obtained from the partitioning are configured to be interconnected in a mesh or ring pattern.

5. The microprocessor system according to claim 1, wherein the plurality of compute dies are configured to be stacked on the data die.

6. The microprocessor system according to claim 1, wherein the plurality of data dies obtained from the partitioning are configured to be stacked one on top of another.

7. An architectural method for a microprocessor system, wherein the microprocessor system is based on a chiplet architecture, and the architectural method comprises:
arranging a plurality of compute dies with computing functions;
arranging a data die coupled to the plurality of compute dies, and arranging, on the data die, an external interface unit, a memory read/write unit, and a plurality of coprocessing units for accelerated data processing; and
arranging a plurality of memory units close to the data die.

8. The architectural method according to claim 7, further comprising:
arranging the coprocessing units in close proximity to the memory read/write unit.

9. The architectural method according to claim 7, further comprising:
partitioning the data die into a plurality of data dies, and interconnecting the plurality of data dies obtained from the partitioning.

10. The architectural method according to claim 9, wherein the plurality of data dies obtained from the partitioning are interconnected in a mesh or ring pattern.

11. The architectural method according to claim 7, further comprising:
arranging the plurality of compute dies stacked on the data die.

12. The architectural method according to claim 9, wherein the plurality of data dies obtained from the partitioning are arranged stacked one on top of another.

13. A processor chip, comprising the microprocessor system based on a chiplet architecture of claims 1 to 6.

14. An electronic device configured with the processor chip of claim 13.
